(19) Europäisches Patentamt
European Patent Office
Office européen des brevets

(11) **EP 2 492 707 B1**

(12) **EUROPEAN PATENT SPECIFICATION**

(45) Date of publication and mention
of the grant of the patent:
**08.06.2016 Bulletin 2016/23**

(51) Int Cl.:
*G01S 5/00* *(2006.01)*        *G01S 5/02* *(2006.01)*

(21) Application number: **11156141.1**

(22) Date of filing: **28.02.2011**

(54) **Method for determining a map of an area associated to a base station**

Verfahren zur Bestimmung einer Karte auf einem mit einer Basisstation verknüpften Bereich

Procédé pour la détermination d'une carte de la zone associée à une station de base

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**29.08.2012 Bulletin 2012/35**

(73) Proprietors:
• **Mitsubishi Electric R&D Centre Europe B.V.
1119 NS Schiphol Rijk (NL)**
Designated Contracting States:
**FR**
• **Mitsubishi Electric Corporation
Chiyoda-ku
Tokyo 100-8310 (JP)**
Designated Contracting States:
**AL AT BE BG CH CY CZ DE DK EE ES FI GB GR
HR HU IE IS IT LI LT LU LV MC MK MT NL NO PL
PT RO RS SE SI SK SM TR**

(72) Inventor: **Noureddine, Hadi
35708 Rennes Cedex 7 (FR)**

(74) Representative: **Le Guen-Maillet
5, place de Newquay
BP 70250
35802 Dinard Cedex (FR)**

(56) References cited:
WO-A1-03/102622        WO-A1-2009/122000
WO-A2-2006/017266      DE-A1-102006 044 293
US-A1- 2005 246 334

• **XIAOYONG CHAI ET AL: "Reducing the
Calibration Effort for Probabilistic Indoor
Location Estimation", IEEE TRANSACTIONS ON
MOBILE COMPUTING, IEEE SERVICE CENTER,
LOS ALAMITOS, CA, US, vol. 6, no. 6, 1 June 2007
(2007-06-01), pages 649-662, XP011179709, ISSN:
1536-1233, DOI: 10.1109/TMC.2007.1025**

**Description**

The present invention relates generally to a method and a device for determining a map of an area associated to a base station and for determining the location of a terminal.

The determination of the location of a terminal is a classical problem. Global Navigation Satellite Systems (GNSS) solutions enable the determination of a mobile terminal location when the terminal is equipped with such functionality. This solution is expensive and does not work everywhere such as indoors or urban canyons.

In wireless cellular telecommunication networks, in order to determine the location of a terminal, like a mobile phone, alternative solutions have been proposed like measurements on signals radiated by surrounding base stations.

Examples of these alternatives are those using the power or signal strength measured between the mobile terminal and several base stations.

Such solution is efficient in free space propagation, where there is an unobstructed line-of-sight between the transmitter and the receiver. Propagation models are used to predict the received signal strength which decays, in a predictable fashion, with the distance separating the transmitter and the receiver.

Practically, there are environmental obstacles causing several propagation effects such as scattering, reflection and diffraction.

In such multipath environments, the signal strength is difficult to predict and may be modeled by a combination of path loss, large scale fading or shadowing and small scale fading.

The small scale fading may be filtered out by averaging the signal over a time window or over the used bandwidth or by using multiple antennas.

The shadowing is due to obstacles like buildings and hills in outdoor and wall and furniture in indoor. Shadowing depends on the position and obstacles like buildings hills and so on. If its value is not known, the accuracy of the geo-localization solutions based on signal strength can be drastically deteriorated.

The patent application US 2005/246334 discloses a method for refining a radio map in a wireless network using an initial map which is generated by manual measurements to be improved by unsupervised teaming or by predictions to be refined to more accurate values by unsupervised learning.

The paper of Xiaoyong Chai and Quiang Yang entitled "Reducing the calibration effort for probabilistic indoor location estimation" discloses a method for estimating the location of a device using probabilistic distribution of unlabeled traces which are mobile terminal signal strength measurements.

The patent application DE 10 2006 044293 discloses refinement method of a radio map using the measured signals of terminals of unknown position by applying a probability distribution of the measured values.

The present invention aims at determining a map of an area associated to a base station and at improving the determination of the location of a terminal using measurements on signals transferred by at least one base station of a wireless telecommunication network and received by the terminal or transferred by the mobile terminal and received by at least one base station.

To that end, the present invention concerns a method for determining a map of an area associated to a base station, the map being composed of probability distributions associated to coefficients enabling the determination of shadowing values intended to determine the location of a terminal, the terminal receiving signals from the base station or the base station receiving signals from the terminal, characterised in that the method comprises the steps of:

-    determining an initial map which is modeled by a random field,
-    obtaining measurements on power of signals transferred by the base station and received by the terminal or measurements on power of signals transferred by the terminal and received by the base station and positioning measurements performed by the terminal or by the base station,
-    obtaining probability distributions associated to coefficients of the map of the base station which correspond to the power measurements,
-    determining the probability distributions of the location using the power measurements and the positioning measurements,
-    checking if the variance of the determined probability distributions of the location is upper than a given value,
-    updating the map if the variance of the determined probability distributions of the location is lower than the given value.

The present invention concerns also a device for determining a map of an area associated to a base station, the map being composed of probability distributions associated to coefficients enabling the determination of shadowing values intended to determine the location of a terminal, the terminal receiving signals from the base station or the base station receiving signals from the terminal, characterised in that the device comprises:

-    means for determining an initial map which is modeled by a random field,
-    means for obtaining measurements on power of signals transferred by the base station and received by the terminal or measurements on power of signals transferred by the terminal and received by the base station and positioning measurements performed by the terminal or by the base station,

- means for obtaining probability distributions associated to coefficients of the map of the base station which correspond to the power measurements,
- means for determining the probability distributions of the location using the power measurements and the positioning measurements,
- means for checking if the variance of the determined probability distributions of the location is upper than a given value,
- means for updating the map if the variance of the determined probability distributions of the location is lower than the given value.

Thus, it is possible to determine a map which is representative of shadowing values for a base station. The shadowing map may be used, for example, in order to improve the determination of the location of terminals.

Furthermore, by updating the map only if the variance of the determined probability distributions of the location is lower than the given value, the present invention improves the accuracy of the coefficients.

According to a particular feature, the given value is a predetermined value or depends on the area.

Thus, it is possible to adjust the criterion for updating the map according to real conditions in the area, like for example, indoor, outdoor, urban or rural areas.

The use of probability distributions allows for applying Bayesian estimation techniques in updating these probability distributions and estimating the location.

According to a particular feature, the probability distributions associated to the coefficients are means and variances.

Thus, by assuming Gaussian distributions, the process is simplified by using first and second order moments.

Furthermore, the use of probability distributions allows for applying Bayesian estimation techniques in updating these probability distributions and estimating the locations.

According to a particular feature, the initial map is modeled by using a basis expansion method.

Thus, the complexity is reduced. Basis expansion is used in order to have a finite number of coefficients to deal with by keeping the dominant basis functions where a random coefficient is associated to a basis function.

According to a particular feature, one map of the area associated to each of plural base stations is determined, the terminal receiving signals from the base stations or at least one base station receives signals from the mobile terminal, and one initial map is determined for each base station, measurements are received on power of signals transferred by the base stations and received by the terminal or transferred by the terminal and received by the base stations, probability distributions associated to coefficients of the maps of the base stations which correspond to the power measurements are obtained, probability distributions of the location are determined using the power measurements and positioning measurements, the variance of the determined probability distributions is compared to the given value and maps are updated if the variance of the determined probability distributions of the location is lower than the given value.

Thus, the present invention takes into account possible correlation between different maps of different base stations which cover common areas.

According to a particular feature, the initial map is determined only one time and in that, the obtaining steps, the probability distributions determination step, the checking and the updating steps are iteratively determined.

Thus, the initial map provides a priori information. The iteration of the remaining steps allows for updating the shadowing maps based on measurements made over time by one or several terminals and thus improving the estimation of the maps and keeping them up-to-date.

According to a particular feature, the probability distributions are determined from plural consecutive measurements on power and positioning measurements.

Thus, the present invention takes into account possible correlation between different time periods. When a mobile is moving along a path, the present invention takes profit of the correlation between successive locations and measurements.

According to a particular feature, the wireless telecommunication network is a wireless cellular telecommunication network.

Thus, it is possible to determine a map which is representative of shadowing values for a base station. The shadowing map may be used, for example, in order to improve the determination of the location of mobile terminals.

According to still another aspect, the present invention concerns a method for determining the location of a terminal in a wireless telecommunication network composed of at least one base station, a map of an area being associated to a base station, the map being composed of probability distributions associated to coefficients enabling the determination of shadowing values intended to determine the location of a terminal, the terminal receiving signals from the base station or the base station receiving signals from the terminal, characterised in that the method comprises the steps of:

- obtaining measurements on power of signals transferred by the base station and received by the terminal or measurements on power of signals transferred by the terminal and received by the base station and positioning measurements performed by the terminal or by the base station,
- obtaining probability distributions associated to coefficients of the map of the base station which correspond to the power measurements,
- determining the probability distributions of the location using the power measurements and positioning measurements,
- determining the position of the terminal according to determined probability distributions.

**[0035]** The present invention concerns also a device for determining the location of a terminal in a wireless telecommunication network composed of at least one base station, a map of an area being associated to a base station, the map being composed of probability distributions associated to coefficients enabling the determination of shadowing values intended to determine the location of a terminal, the terminal receiving signals from the base station or the base station receiving signals from the terminal, characterised in that the device comprises:

- means for obtaining measurements on power of signals transferred by the base station and received by the terminal or measurements on power of signals transferred by the terminal and received by the base station and positioning measurements performed by the terminal or by the base station,
- means for obtaining probability distributions associated to coefficients of the map of the base station which correspond to the power measurements,
- means for determining the probability distributions of the location using the power measurements and positioning measurements,
- means for determining the position of the terminal according to determined probability distributions.

**[0036]** Thus, it is possible to determine accurately the location of terminals.

**[0037]** According to still another aspect, the present invention concerns computer programs which can be directly loadable into a programmable device, comprising instructions or portions of code for implementing the steps of the methods according to the invention, when said computer programs are executed on a programmable device.

**[0038]** The present invention also concerns an information storage means, storing a computer program comprising a set of instructions that can be run by a processor for implementing the aforementioned methods in any one of its various embodiments, when the stored information is read by a computer and run by a processor.

**[0039]** Since the features and advantages relating to the computer programs are the same as those set out above related to the method and device according to the invention, they will not be repeated here.

**[0040]** The characteristics of the invention will emerge more clearly from a reading of the following description of an example embodiment, the said description being produced with reference to the accompanying drawings, among which :

Fig. 1 represents a wireless cellular telecommunication network in which the present invention is implemented;
Fig. 2 is a diagram representing the architecture of a server in which the present invention is implemented ;
Fig. 3 is a diagram representing the architecture of a base station in which the present invention is implemented ;
Fig. 4 is a diagram representing the architecture of a terminal in which the present invention is implemented ;
Fig. 5 discloses a first algorithm according to the present invention;
Fig. 6 discloses a second algorithm according to the present invention.

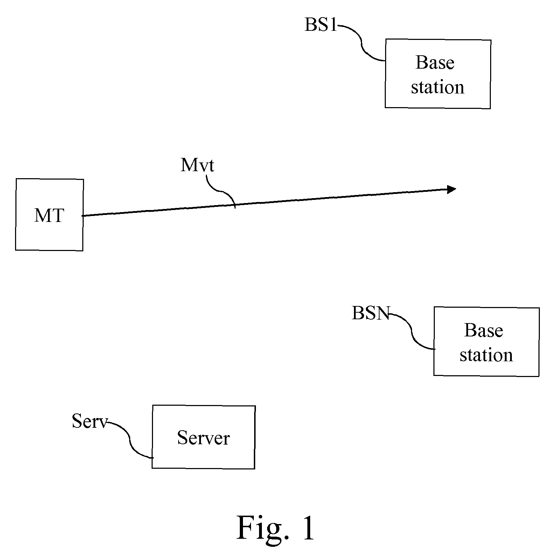

**[0041]** **Fig. 1** represents a wireless cellular telecommunication network in which the present invention is implemented.

**[0042]** In Fig. 1, base stations BS1 to BSN of a wireless telecommunication network are shown.

**[0043]** The base stations BS1 to BSN are radiating and/or receiving signals that are received and/or transferred by a terminal MT which is moving according to a direction represented by the arrow Mvt.

**[0044]** The base stations BS 1 to BSN are linked to a server Serv by a backbone network which may be, for example, a DSL (Digital Subscriber Line) network or an ISDN (Integrated Services Digital Network).

**[0045]** Only one terminal MT is shown in Fig. 1 for the sake of clarity but we can understand that the present invention works when a more or less important number of terminals exist.

**[0046]** The base stations BS1 to BSN are named also access points of a local area network or when the wireless telecommunication network is a wireless cellular telecommunication network, home base stations, femto base stations or pico base stations or relays.

**[0047]** The terminal MT may be a mobile terminal like a mobile phone, or a device like a femto base station which is installed in the premises of a user.

**[0048]** According to the invention, the server Serv or at least one base station BS or the terminal MT:

- determines an initial map which is modeled by a random field,
- obtains measurements on power of signals transferred by the base station BS and received by the terminal MT or measurements on power of signals transferred by the terminal MT and received by the base station BS and positioning measurements performed by the terminal MT or the base station BS,
- obtains probability distributions associated to coefficients of the map of the base station which correspond to the power measurements,
- determines the probability distributions of the location using the power measurements and the positioning measurements,
- checks if the variance of the determined probability distributions of the location is upper than a given value,
- updates the map if the variance of the determined probability distributions of the location is lower than the given value.

Furthermore, the server Serv or at least one base station BS or the terminal MT:

- obtains measurements on power of signals transferred by the base station BS and received by the terminal MT or measurements on power of signals transferred by the terminal MT and received by the base station BS and positioning measurements performed by the terminal MT or by the base station BS,
- obtains probability distributions associated to coefficients of the map of the base station which correspond to the power measurements,
- determines the probability distributions of the location using the power measurements and positioning measurements,
- determines the position of the terminal according to determined probability distributions.

According to the invention, a shadowing map is determined for one or each base station located in an area. A shadowing map is a map of the shadowing values at the different space positions of a considered area, or in other words, a function that takes a position or coordinate vector as an input and returns the shadowing value.

According to the invention, when the shadowing map is not perfectly known at some or all the positions, the shadowing map is modeled by a random field.

The present invention takes advantage on the fact that the shadowing has a log-normal distribution.

Let denote X a position vector in d dimensions, and $S_i(X,t)$ the shadowing map in decibels of the i-th base station BSi out of N.

In the absence of any information about the shadowing, $S_i(X,t)$ has a mean $m_i(X)$ and a correlation $E\{S_i(X_1,t) S_i(X_2,t)\}=R_i(X_1 X_2)$, where $X_1$ and $X_2$ are two arbitrary positions.

As the shadowing evolves very slowly in time, it can be described by a Markov process of transition distribution $p(S_i(X,t) \mid \{(S_i(X,t-1), X \in A \subset R^d\}$ where A is the area which is included in $R^d$, t represents the current time, t-1 the previous time and $R^d$ is the d dimensional vector space over real numbers.

This distribution and the mean and the correlation of a shadowing map can be represented by parametric models with parameters estimated from training measurements or can be assumed for a given area like for example, urban area, suburban area or rural area.

The shadowing values corresponding to measurements made with the base stations BS 1 to BSN can also be correlated:

$$E \{ S_2(X,t) S_1(X',t) \} \neq E \{S_2(X,t)\}*E\{S_1(X',t)\}$$

where X and X' are two arbitrary positions.

This correlation can be considered because the terminal MT is surrounded by the same scattering objects and the base stations BS may be near each other. Thus, common propagation paths between the base stations BS and the terminal MT may exist.

A shadowing atlas is the set of shadowing maps of the different base stations BS in a considered area.

According to the invention, a shadowing map is built using a basis-expansion representation, like for example using the Karhunen-Loève theorem, and keep a finite number of dominant components:

$$S_i(X,t) \approx \sum_{k=1}^{K} \alpha_k(t)_i \psi_k(X),$$

where $\Psi k$ is a deterministic function and $\{\alpha_{k,i}(t)\}_{k=1}^{K}$ are the coefficients determined according to the invention.

Examples of deterministic function are orthonormal polynomials or rectangular functions. The initial parameters or the initial distribution of the coefficients is determined from the considered correlation function $R_i(X_1,X_2)$ and the used basis functions.

Let denote $\Lambda(t)=[\alpha_{k,i}(t)]_{k=1:K;i=1:N}$ the vector of all the coefficients at time t of the maps of the different base stations BS 1 to BSN in the considered area.

Let assume that at time t-1, the probability distributions of the coefficients $p(\Lambda(t-1))$ are known. For example, if this distribution is Gaussian, the mean vector m(t-1) and the covariance matrix C(t-1) are known.

According to the present invention, the position of the terminal MT may be determined one single time or at consecutive times.

Let denote y(t) the vector at time t of signal strength measurements provided by the terminal MT and z(t) the vector at time t of other measurements, like for example

the time of arrival of signals transferred by the base stations BS1 to BSN that allow performing an estimation of the position.

If the position of the terminal MT is estimated one time only based on the measurements made at time t, $p(\Lambda(t)|y(t),z(t))$ is obtained by a marginalization operation and by applying Bayes theorem:

$$p(\Lambda(t)|y(t),z(t))= \int p(\Lambda(t)|X(t),y(t))p(X(t)|y(t),z(t))\, dX(t)$$

where X(t) is the position at time t.
$p(\Lambda(t)|X(t),y(t))$ can be computed using a previously determined probability distribution of the coefficients $p(\Lambda(t-1))$ and the transition equation $p(\Lambda(t)|\Lambda(t-1))$.

The transition equation enables the determination of the probability distributions associated to the coefficients at time t from measurements obtained a time t-1 which are modified in order to take into account the time evolution of the shadowing maps due to changes in the environment.

If the position of the terminal MT is estimated successively based on the measurements made at M+1 time steps, the joint distribution of the positions $p(X(t),...,X(t-M)|y(t),...,y(t-M),z(t),...,z(t-M))$ is computed.

It has to be noted here that, if time steps are short, the different positions are not independent. $p(\Lambda(t)|y(t),...,y(t-M),z(t),...,z(t-M))$ is obtained as follows:

$$\int p(\Lambda(t)|X(t),...,X(t-M),y(t),...,y(t-M))*p(X(t),...,X(t-M)|y(t),...,y(t-M),z(t),...,z(t-M))\, dX(t)...dX(t-M)$$

Approximating solution of the integral equations presented above arc determined using numerical techniques like for example Monte Carlo integration and particle filtering techniques.

If $p(X(t),...,X(t-M)|y(t),...,y(t-M),z(t),...,z(t-M))$ is approximated by a weighted set of trajectories $\{w^i,X_{t:t-M}^i\}_{i=1}^{L}$, where $X_{t:t-M}^i = (X^i(t),...,X^i(t-M))$, $L$ (X'(t),...,X'(t-M)), L is the cardinal of the set of trajectories and $w^1$ is a weight associated to the i-th trajectory.

$$p(X_{t:t-M}|y(t),...,y(t-M),z(t),...,z(t-M)) \approx$$
$$\sum_{i=1}^{L} w^i \delta(X_{t:t-M},X_{t:t-M}^i)$$

where $\delta$ is the Kronecker delta function.

For example, this weighted set is available by default when particle filtering is used to track the position or the sample trajectories can be drawn from a probability distribution $q(X_{t:t-M}|y(t),...,y(t-M),z(t),...,z(t-M))$ and the weights can be calculated according to

$$w^i = \frac{p(X^i_{t:t-M}|y(t),...,y(t-M),z(t),...,z(t-M))}{q(X^i_{t:t-M}|y(t),...,y(t-M),z(t),...,z(t-M))}$$

The integral equation becomes:

$$p(\Lambda(t)|y(t),...,y(t-M),z(t),...,z(t-M)) \approx$$
$$\sum^L w^i p(\Lambda(t)|X^i_{t:t-M},y(t),...,y(t-M))$$

As a Gaussian model of the shadowing is considered, $p(\Lambda(t)|X^i_{t:t-M},y(t),...,y(t-M))$ is Gaussian distributed and can be computed analytically since the signal strength measurements, when expressed in decibels, are linear with respect to the shadowing.

The distribution $p(\Lambda(t)|y(t),...,y(\tau-M),z(t),...,z(t-M))$ is then a mixture of Gaussians which may be approximated by a single Gaussian distribution or a mixture of Gaussians with a smaller number of elements.

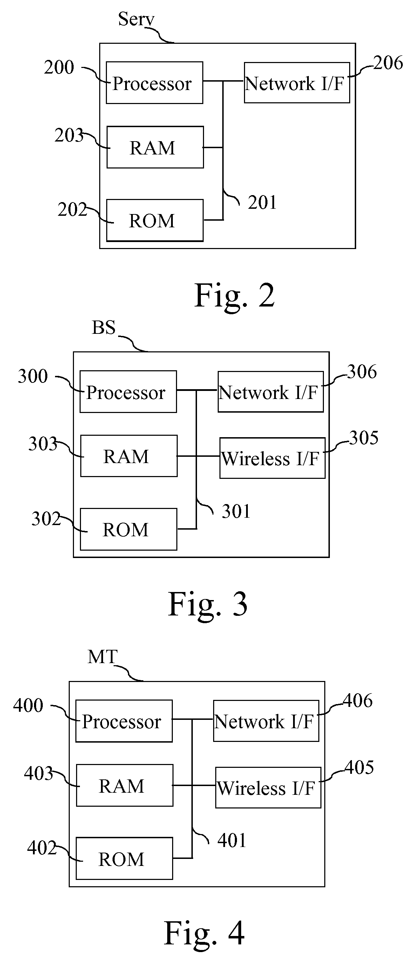

**Fig. 2** is a diagram representing the architecture of a server in which the present invention is implemented.

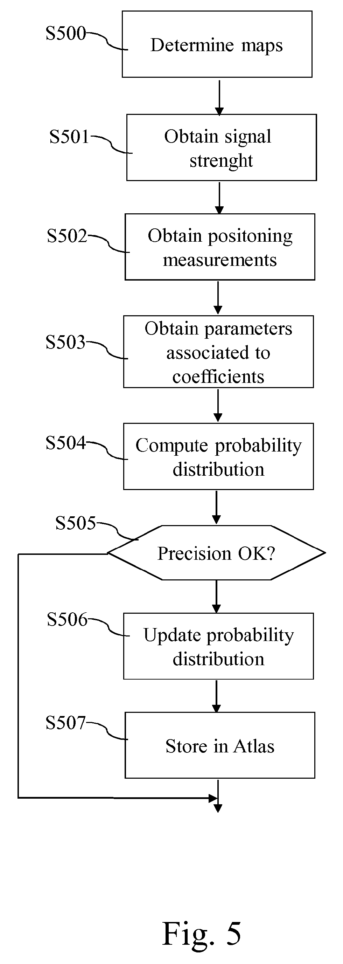

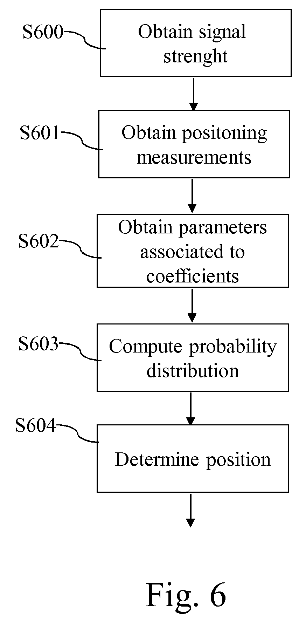

The server Serv has, for example, an architecture based on components connected together by a bus 201 and a processor 200 controlled by the programs as disclosed in Figs. 5 and 6.

The bus 201 links the processor 200 to a read only memory ROM 202, a random access memory RAM 203 and a network interface 206.

The memory 203 contains registers intended to receive variables and the instructions of the program related to the algorithms as disclosed in Figs. 5 and 6.

The processor 200 controls the operation of the network interface 206.

The read only memory 202 contains instructions of the programs related to the algorithms as disclosed in Figs. 5 and 6, which are transferred, when the server Serv is powered on, to the random access memory 203.

The server Serv is connected to a backbone network through the network interface 206. For example, the network interface 206 is a DSL modem, or an ISDN interface, etc. Through the network interface 206, the server Serv may transfer messages to the core network of the wireless cellular telecommunication network or transfers or receives data to base stations BS.

**Fig. 3** is a diagram representing the architecture of a base station in which the present invention may be implemented.

**Fig. 3** is a diagram representing the architecture of a base station in which the present invention may be implemented.

The base station BS has, for example, an architecture based on components connected together by a bus 301 and a processor 300 controlled by the programs as disclosed in Figs. 5 and 6.

The bus 301 links the processor 300 to a read only memory ROM 302, a random access memory RAM 303, a wireless interface 305 and a network interface 306. The memory 303 contains registers intended to receive variables and the instructions of the programs related to the algorithms as disclosed in Figs. 5 and 6.

The processor 300 controls the operation of the network interface 306 and controls the operation of the wireless interface 305.

The read only memory 302 contains instructions of the program related to the algorithms as disclosed in Figs. 5 and 6, which are transferred, when the base station BS is powered on, to the random access memory 303.

The base station BS is connected to a backbone network through the network interface 306. For example, the network interface 306 is a DSL modem, or an ISDN interface, etc. Through the network interface 306, the base station BS may transfer or receive messages to the server Serv, i.e may transfer measurements on power of signals transferred by the base station BS and received by the terminal MT or may transfer measurements on power of signals transferred by the terminal and received by the base station and positioning measurements performed by the terminal MT or the base station BS.

Through the network interface 306, the base station BS may also transfer or receive probability distributions of the coefficients from or to the server Serv or may transfer or receive probability distributions of the position of the terminal MT.

The wireless interface 305 comprises means for measuring the power of signals transferred by the terminal MT and received by the base station BS and means for determining positioning measurements of terminal MT using for example the time of arrival of signals.

The wireless interface 305 comprises means for receiving measurements performed by the terminal MT on the power of signals transferred by the base station BS and received by the terminal MT and for receiving positioning measurements performed by terminal MT.

**Fig. 4** is a diagram representing the architecture of a terminal in which the present invention is implemented.

The terminal MT has, for example, an architecture based on components connected together by a bus 401 and a processor 400 controlled by the program as disclosed in Fig. 6.

The bus 401 links the processor 400 to a read only memory ROM 402, a random access memory RAM 403 and a wireless interface 305. The memory 403 contains registers intended to receive variables and the instructions of the program related to the algorithms as disclosed in Fig. 6.

The processor 400 controls the operation of the wireless interface 405.

The read only memory 402 contains instructions of the program related to the algorithm as disclosed in Fig. 6, which are transferred, when the terminal MT is powered on, to the random access memory 403.

The wireless interface 405 comprises means for transferring signals to the base station BS.

The wireless interface 405 comprises means for determining positioning measurements of terminal MT using for example the time of arrival of signals.

The wireless interface 405 comprises means for receiving from the base station BS positioning measurements of terminal MT.

The wireless interface 405 comprises means for receiving probability distributions of the coefficients from the base station BS.

The wireless interface 405 comprises means for receiving or transferring probability distributions of the positions from or to the base station BS.

The wireless interface 405 comprises means for measuring signals transferred by the base station BS.

The wireless interface 405 comprises means for transferring measurements performed by the terminal MT on the power of signals transferred by the base station BS and received by the terminal MT and for transferring positioning measurements performed by terminal MT.

Any and all steps of the algorithms described hereinafter with regard to Figs. 5 and 6 may be implemented in software by execution of a set of instructions or program by a programmable computing machine, such as a PC (*Personal Computes),* a DSP (*Digital Signal Processor*) or a microcontroller; or else implemented in hardware by a machine or a dedicated component, such as an FPGA (*Field-Programmable Gate Array*) or an ASIC (*Application-Specific Integrated Circuit*).

**Fig. 5** discloses a first algorithm executed by the server according to the present invention.

The present algorithm may be executed by the server Serv or the base stations BS.

More precisely, the present algorithm is executed by the processor 200 of the server Serv or by the processor 300 of each base station BS.

The present algorithm will be disclosed in an example wherein the processor 200 of the server Serv executes the present algorithm.

At step S500, the processor 200 determines a shadowing map for at least one base station BS.

According to a particular mode of realization of the present invention, the processor 200 determines a shadowing map for each base station BS 1 to BSN located in an area.

According to the invention, when the shadowing map is not perfectly known at some or all the positions or at the initialization of the present invention, it can be modeled by a random field.

For example, the shadowing map is built using a basis-expansion representation, and keeps a finite number of dominant components:

$$S_i(X,t) \approx \sum_{k=1}^{K} \alpha_k(t)_i \psi_k(X).$$

At next step S501, the processor 200 obtains measurements on power of signals transferred by the base stations BS1 to BSN and received by the terminal MT or obtains measurements on power of signals transferred by the terminal MT to the at least a part of the base stations BS1 to BSN.

Measurements on power of signals are equal to y(t) when the present algorithm is executed from a single pair of measurements or are equal to y(t),...,y(t-M) when the present algorithm is executed from plural consecutive power measurements.

A pair of measurements comprises measurements of power and positioning measurements.

Measurements on power are received, through the network interface 206 when the server Serv executes the present algorithm.

When the base stations BS executes the present algorithm, measurements on power are received through the wireless interface 305 from the terminal MT or performed by the wireless interface 305 on signals transferred by the terminal MT.

At next step S502, the processor 200 obtains positioning measurements of the terminal MT.

Positioning measurements are equal to z(t) when the present algorithm is executed from a single pair of measurements or are equal to z(t),...,z(t-M) when the present algorithm is executed from plural consecutive pairs of measurements.

Positioning measurements are received, through the network interface 206 when the server Serv executes the present algorithm.

When the base stations BS execute the present algorithm, positioning measurements are received through the wireless interface 305 from the terminal MT or performed by the wireless interface 305.

Positioning measurements are for example measurements of the time of arrival of signals transferred by base stations BS 1 to BSN or measurements of the direction of arrival of signals transferred by base stations BS1 to BSN.

Positioning measurements are for example measurements of the time of arrival of signals transferred by the terminal MT or measurements of the direction of arrival of signals transferred by the terminal MT.

At next step S503, the processor 300 obtains parameters associated to coefficients of the maps of the base stations BS 1 to BSN which correspond to the power measurements.

When the present algorithm is executed from a single pair of measurements, parameters associated to coefficients are the probability distributions, like the mean and variance, of the probability distribution p⁻(Λ(t)). This distribution is computed according to:

$$p^{-}(\Lambda(t)) = \int p(\Lambda(t)|\Lambda(t-1))p(\Lambda(t-1))d\Lambda(t-1)$$

where p(Λ(t-1)) is the probability distribution of the coefficients available at time t-1 and obtained based on the power and positioning measurements made up to time t-1, and p(Λ(t)|Λ(t-1)) is a transition probability distribution which assumed to be known and reflects the time evolution of the shadowing maps due to changes in the environment. If the shadowing is assumed to be time invariant, then p⁻⁻(Λ(t))=p(Λ(t-1))

When the present algorithm is executed from plural consecutive pairs of measurements, parameters associated to coefficients are the probability distributions, like the mean and variance, of the probability distribution p"(A(t-M))

Parameters associated to coefficients are for example stored in the RAM memory 203.

At next step S504, the processor 200 determines the probability distributions of the location using the power measurements and the positioning measurements.

When the present algorithm is executed from a single pair of measurements, the processor 200 computes the probability distribution of the location:

$$p(X(t)|y(t),z(t)) \propto$$
$$p(X(t))p(z(t)|X(t))p(y(t)|X(t))$$
$$\propto p(X(t))p(z(t)|X(t))\int p(y(t)|\Lambda(t),X(t))\ p^{-}(\Lambda(t))d\Lambda(t)$$

When the present algorithm is executed from plural consecutive pairs of measurements, the processor 200 computes the probability distribution of the locations:

$$p(X(t),...,X(t-M)|y(t),...,y(t-M),z(t),...,z(t-M))$$

This distribution can be obtained using particle filters where it is approximated by a weighted set of trajectories $\{w^{i}, X_{t:t-M}^{i}\}_{i=1}^{L}$:

$$p(X_{t:t-M}|y(t),...,y(t-M),z(t),...,z(t-M))$$
$$\approx \sum_{i=1}^{L} w^{i}\delta(X_{t:t-M}, X_{t:t-M}^{i})$$

At next step S505, the processor 200 checks if the variance of the probability distributions of the locations determined at step S504 is lower than a given value.

The given value is for example a predetermined value or may depend on the area. For example, according to the fact that the area is in country side area or is an urban area or is an indoor area.

If the variance of the probability distribution of the locations determined at step S504 is upper than the given value, the processor 200 interrupts the present algorithm.

Otherwise, the processor 200 moves to step S506.

At step S506, the processor 200 updates the parameters associated to coefficients of the maps of the base stations BS1 to BSN which correspond to the positioning measurements.

Parameters associated to coefficients are the probability distribution, like the mean and variance, of the coefficients.

When the present algorithm is executed from a single pair of measurements, the processor 200 updates the probability distribution of the coefficients $p(\Lambda(t)|y(t),z(t)) = \int p(\Lambda(t)|X(t),y(t))p(X(t)|y(t),z(t))\,dX(t)$

In this equation, $p(X(t)|y(t),z(t))$ is obtained from S504 and $p(\Lambda(t)|X(t),y(t))$ is computed analytically by updating $p^{--}(\Lambda(t))$ since the observations are linear with respect to the shadowing.

It has to be noted here that, at next time t+1, the processor 200 will execute the present for the same or a different terminal MT, if there are observations available for time t+1, the same previous steps are repeated. We denote $p(\Lambda(t)|y(t),z(t))$ by $p(A(t))$ in the computation of $p^{--}(\Lambda(t+1))$.

When the present algorithm is executed from plural consecutive pairs of measurements, the processor 200 updates the probability distribution of the coefficients (i.e., updates the parameters):

The integral equation is replaced by:

$$p(\Lambda(t)|y(t),...,y(t\text{-}M),z(t),...,z(t\text{-}M)) \approx$$
$$\sum_{i=1}^{L} w^{i} p(\Lambda(t)|X_{t:t\text{-}M}^{i},y(t),...,y(t\text{-}M))$$

At next step S507, the processor 200 updates the maps of the atlas.

It has to be noted here that in a variant, the steps S501 to S505 may be performed by the terminal MT and if the variance of the distribution is less than a value, the distribution and the measurements are transferred to the base station BS or the server Serv to update the coefficients probability distribution.

**Fig. 6** discloses a second algorithm according to the present invention.

More precisely, the present algorithm is executed by the processor 200 of the server Serv or by the processor 300 of each base station BS or by the processor 400 of the terminal MT.

The present algorithm will be disclosed in an example wherein the processor 200 of the server Serv executes the present algorithm.

At step S600, the processor 200 obtains measurements on power of signals transferred by the base stations BS 1 to BSN and received by the terminal MT or obtains measurements on power of signals transferred by the terminal MT to the at least a part of the base stations BS1 to BSN.

Measurements on power of signals are equal to y(t) when the present algorithm is executed from a single pair of measurements or are equal to y(t),...,y(t-M) when the present algorithm is executed from plural consecutive power measurements.

Measurements on power are received, through the network interface 206 when the server Serv executes the present algorithm.

When the base stations BS execute the present algorithm, measurements on power are received through the wireless interface 305 from the terminal MT or performed by the wireless interface 305 on signals transferred by the terminal MT.

When the terminal MT executes the present algorithm, measurements on power are performed by the wireless interface 405 on signals transferred by the base stations BS or receives measurements on power from the base station BS through the wireless interface 405.

At next step S601, the processor 200 obtains positioning measurements of the terminal MT.

Positioning measurements are equal to z(t) when the present algorithm is executed from a single pair of measurements or are equal to z(t),...,z(t-M) when the present algorithm is executed from plural consecutive pairs of measurements.

Positioning measurements are received, through the network interface 206 when the server Serv executes the present algorithm.

When the base stations BS execute the present algorithm, positioning measurements are received through the wireless interface 305 from the terminal MT or performed by the wireless interface 305.

Positioning measurements are for example measurements of the time of arrival of signals transferred by base stations BS 1 to BSN or measurements of the direction of arrival of signals transferred by base stations BS1 to BSN.

Positioning measurements are for example measurements of the time of arrival of signals transferred by the terminal MT or measurements of the direction of arrival of signals transferred by the terminal MT.

When the terminal MT executes the present algorithms, measurements are performed by the terminal MT or received from the base station BS through the wireless interface 405.

At next step S602, the processor 200 obtains parameters associated to coefficients of the maps of the base stations BS 1 to BSN which correspond to the power measurements.

When the present algorithm is executed from a single pair of measurements, parameters associated to coefficients are the probability distributions, like the mean and variance, of the probability distribution $p^{--}(\Lambda(t))$. This distribution is computed according to:

$$p^{--}(\Lambda(t))=\int p(\Lambda(t)|\Lambda(t-1))p(\Lambda(t-1))d\Lambda(t-1)$$

where $p(\Lambda(t-1))$ is the probability distribution of the coefficients available at time t-1 and obtained based on the power and positioning measurements made up to time t-1, and $p(\Lambda(t)|\Lambda(t-1))$ is a transition probability distribution which assumed to be known and reflects the time evolution of the shadowing maps due to changes in the environment. If the shadowing is assumed to be time invariant, then $p^{-}(\Lambda(t))=p(\Lambda(t-1))$

When the present algorithm is executed from plural consecutive pairs of measurements, parameters associated to coefficients are the probability distributions, like the mean and variance, of the probability distribution $p^{-}(\Lambda(t-M))$

Parameters associated to coefficients are for example stored in the RAM memory 203.

When the present algorithm is executed by the terminal MT, parameters associated to coefficients are received by the wireless interface 405 from one base station BS.

At next step S603, the processor 200 determines the probability distributions of the location using the power measurements and the positioning measurements.

When the present algorithm is executed from a single pair of measurements, the processor 200 computes the probability distribution of the position:

$$p(X(t)|y(t),z(t)) \propto$$
$$p(X(t))p(z(t)|X(t))p(y(t)|X(t))$$
$$\propto p(X(t))p(z(t)|X(t))\int p(y(t)|\Lambda(t), X(t))p^{--}(\Lambda(t))d\Lambda(t) \cdot$$

When the present algorithm is executed from plural consecutive pairs of measurements, the processor 200 computes the probability distribution of the position:

$$p(X(t),...,X(t-M)|y(t),...,y(t-M),z(t),...,z(t-M))$$

This distribution can be obtained using particle filters where it is approximated by a weighted set of trajectories $\{w^{i},X^{i}_{t:t-M}\}^{L}_{i=1}$:

$$p(X_{t:t-M}|y(t),...,y(t-M),z(t),...,z(t-M)) \approx$$
$$\sum_{i=1}^{L} w^{i}\delta(X_{t:t-M}, X^{i}_{t:t-M})$$

At next step S604, the processor 200 determines the position of the terminal MT.

At time t, we consider an equipment that wants to be localized based on the signal measurements y(t) and possibly other measurements z(t).

The probability distribution of the position is computed as follows:

$$p(X(t)|y(t),z(t)) \propto$$
$$p(X(t))p(z(t)|X(t))p(y(t)|X(t))$$
$$\propto p(X(t))p(z(t)|X(t))\int p(y(t)|\Lambda(t),X(t))p^{\sim}(\Lambda(t))d\Lambda(t)$$

This distribution can be used to estimate the position. For example, estimators like Minimum Mean Square Error estimator (MMSE) or Maximum A Posteriori estimator (MAP) may be used to determine the position of the terminal MT.

Naturally, many modifications can be made to the embodiments of the invention described above without departing from the scope of the present invention.

**Claims**

1. Method for determining a map of an area associated to a base station, the map being composed of probability distributions associated to coefficients, the method comprises the steps of:

    - determining (S500) an initial map composed of probability distributions associated to coefficients and which is build using a basis-expansion representation using a deterministic function and the coefficients,
    - obtaining (S501) measurements on power of signals transferred by the base station and received by a terminal or measurements on power of signals transferred by the terminal and received by the base station and (S502) positioning measurements of the terminal performed by the terminal or by the base station,
    - obtaining (S503) means and variances associated to coefficients of the map of the area associated to the base station which correspond to the power measurements,
    - determining (S504) the probability distributions of the location using the power measurements and the positioning measurements of the mobile terminal,
    - checking (S505) if the variance of the determined probability distributions of the location is upper than a given value,
    - updating (S506) the map only if the variance of the determined probability distributions of the location is lower than the given value.

2. Method according to claim 1, **characterized in that** the given value is a predetermined value or depends on the area.

3. Method according to any of the claims 1 to 2, **characterised in that** the initial map is modeled by using basis expansion.

4. Method according to any of the claims 1 to 3, **characterised in that** one map of the area associated to each of plural base stations is determined, the terminal receiving signals from the base stations or at least one base station receives signals from the terminal and **in that** one initial map is determined for each base station, measurements are received on power of signals transferred by the base stations and received by the terminal or transferred by the terminal and received by the base stations, probability distributions associated to coefficients of the maps of the base stations which correspond to the power measurements are obtained, probability distributions of the location are determined using the power measurements and positioning measurements, the variance of the determined probability distributions is compared to the given value and maps are updated if the variance of the determined probability distributions of the location is lower than the given value.

5. Method according to any of the claims 1 to 4, **characterised in that** the initial map is determined only one time and **in that**, the obtaining steps, the probability distributions determination step, the checking and the updating steps are iteratively determined.

6. Method according to any of the claims 1 to 5, **characterised in that** the probability distributions are determined from plural consecutive measurements on power and positioning measurements.

7. Method according to any of the claims 1 to 5, **characterised in that** the wireless telecommunication network is a wireless cellular telecommunication network.

8. Device for determining a map of an area associated to a base station, the map being composed of probability distributions associated to coefficients, the device comprises:

- means for determining an initial map composed of probability distributions associated to coefficients and which is built using a basis-expansion representation using a deterministic function and the coefficients,
- means for obtaining measurements on power of signals transferred by the base station and received by a terminal or measurements on power of signals transferred by the terminal and received by the base station and positioning measurements of the terminal performed by the terminal or by the base station,
- means for obtaining means and variances associated to coefficients of the map of the area associated to the base station which correspond to the power measurements,
- means for determining the probability distributions of the location using the power measurements and the positioning measurements of the mobile terminal,
- means for checking if the variance of the determined probability distributions of the location is upper than a given value,
- means for updating the map only if the variance of the determined probability distributions of the location is lower than the given value.

9. Computer program which can be directly loadable into a programmable device, comprising instructions or portions of code for implementing the steps of the method according to claims 1 to 7, when said computer program is executed on a programmable device.


**Patentansprüche**

1. Verfahren zum Bestimmen einer Karte eines zu einer Basisstation gehörenden Gebiets, wobei die Karte aus zu Koeffizienten gehörenden Wahrscheinlichkeitsverteilungen zusammengesetzt ist, wobei das Verfahren die folgenden Schritte aufweist:

- Bestimmen (S500) einer anfänglichen Karte, die aus zu Koeffizienten gehörenden Wahrscheinlichkeitsverteilungen zusammengesetzt ist und die unter Verwendung einer Basisexpansionsdarstellung unter Verwendung einer deterministischen Funktion und der Koeffizienten gebildet wird,
- Erhalten (S501) von Messungen über eine Leistung von durch die Basisstation transferierten und durch ein Endgerät empfangenen Signalen oder von Messungen über eine Leistung von durch das Endgerät transferierten und durch die Basisstation empfangenen Signalen und (S502) von durch das Endgerät oder durch die Basisstation durchgeführten Positionierungsmessungen des Endgeräts,
- Erhalten (S503) von zu Koeffizienten der Karte des zu der Basisstation gehörenden Gebiets gehörenden Mittelwerten und Varianzen, die den Leistungsmessungen entsprechen,
- Bestimmen (S504) der Wahrscheinlichkeitsverteilungen der Lokalisierung unter Verwendung der Leistungsmessungen und der Positionierungsmessungen des mobilen Endgeräts,
- Prüfen (S505), ob die Varianz der bestimmten Wahrscheinlichkeitsverteilungen der Lokalisierung über einem gegebenen Wert ist,
- Updaten (S506) der Karte nur dann, wenn die Varianz der bestimmten Wahrscheinlichkeitsverteilungen der Lokalisierung unter dem gegebenen Wert ist.

2. Verfahren nach Anspruch 1, **dadurch gekennzeichnet, dass** der gegebene Wert ein vorbestimmter Wert ist oder von dem Gebiet abhängt.

3. Verfahren nach einer der Ansprüche 1 bis 2, **dadurch gekennzeichnet, dass** die anfängliche Karte durch Verwendung einer Basisexpansion modelliert wird.

4. Verfahren nach einem der Ansprüche 1 bis 3, **dadurch gekennzeichnet, dass** eine Karte des zu jeder von mehreren Basisstationen gehörenden Gebiets bestimmt wird, wobei das Endgerät Signale von den Basisstationen empfängt oder wenigstens eine Basisstation Signale von dem Endgerät empfängt, und dass eine anfängliche Karte für jede Basisstation bestimmt wird, Messungen über eine Leistung von durch die Basisstationen transferierten und durch das Endgerät empfangenen oder durch das Endgerät transferierten und durch die Basisstationen empfangenen Signalen empfangen werden, zu Koeffizienten der Karten der Basisstationen, die den Leistungsmessungen entsprechen, gehörende Wahrscheinlichkeitsverteilungen erhalten werden, Wahrscheinlichkeitsverteilungen der Lokalisierung unter Verwendung der Leistungsmessungen und Positionierungsmessungen erhalten werden, die Varianz der bestimmten Wahrscheinlichkeitsverteilungen mit dem gegebenen Wert verglichen wird und Karten einem Updaten unterzogen werden, wenn die Varianz der bestimmten Wahrscheinlichkeitsverteilungen der Lokalisierung unter dem gegebenen Wert ist.

5.  Verfahren nach einem der Ansprüche 1 bis 4, **dadurch gekennzeichnet, dass** die anfängliche Karte nur einmal bestimmt wird und dass die Schritte zum Erhalten, der Schritt zum Bestimmen von Wahrscheinlichkeitsverteilungen, die Schritte zum Prüfen und zum Updaten iterativ bestimmt werden.

6.  Verfahren nach einem der Ansprüche 1 bis 5, **dadurch gekennzeichnet, dass** die Wahrscheinlichkeitsverteilungen aus mehreren aufeinanderfolgenden Messungen über eine Leistung und Positionierungsmessungen bestimmt werden.

7.  Verfahren nach einem der Ansprüche 1 bis 5, **dadurch gekennzeichnet, dass** das drahtlose Telekommunikationsnetzwerk ein drahtloses zellulares Telekommunikationsnetzwerk ist.

8.  Vorrichtung zum Bestimmen einer Karte eines zu einer Basisstation gehörenden Gebiets, wobei die Karte aus zu Koeffizienten gehörenden Wahrscheinlichkeitsverteilungen zusammengesetzt ist, wobei die Vorrichtung folgendes aufweist:

    - eine Einrichtung zum Bestimmen einer anfänglichen Karte, die aus zu Koeffizienten gehörenden Wahrscheinlichkeitsverteilungen zusammengesetzt ist und die unter Verwendung einer Basisexpansionsdarstellung unter Verwendung einer deterministischen Funktion und der Koeffizienten gebildet wird,
    - eine Einrichtung zum Erhalten von Messungen über eine Leistung von durch die Basisstation transferierten und durch ein Endgerät empfangenen Signalen oder von Messungen über eine Leistung von durch das Endgerät transferierten und durch die Basisstation empfangenen Signalen und von durch das Endgerät oder durch die Basisstation durchgeführten Positionierungsmessungen des Endgeräts,
    - eine Einrichtung zum Erhalten von zu Koeffizienten der Karte des zu der Basisstation gehörenden Gebiets gehörenden Mittelwerten und Varianzen, die den Leistungsmessungen entsprechen,
    - eine Einrichtung zum Bestimmen der Wahrscheinlichkeitsverteilungen der Lokalisierung unter Verwendung der Leistungsmessungen und der Positionierungsmessungen des mobilen Endgeräts,
    - eine Einrichtung zum Prüfen, ob die Varianz der bestimmten Wahrscheinlichkeitsverteilungen der Lokalisierung über einem gegebenen Wert ist,
    - eine Einrichtung zum Updaten der Karte nur dann, wenn die Varianz der bestimmten Wahrscheinlichkeitsverteilungen der Lokalisierung unter dem gegebenen Wert ist.

9.  Computerprogramm, das direkt in eine programmierbare Vorrichtung ladbar sein kann, mit Anweisungen oder Teilbereichen eines Codes zum Implementieren der Schritte des Verfahrens nach den Ansprüchen 1 bis 7, wenn das Computerprogramm auf einer programmierbaren Vorrichtung ausgeführt wird.

**Revendications**

1.  Procédé de détermination d'une carte d'une zone associée à une station de base, la carte étant composée de distributions de probabilités associées à des coefficients, le procédé comportant les étapes de :

    - détermination (S500) d'une carte initiale composée de distributions de probabilités associées à des coefficients et qui est construite en utilisant une représentation base-extension à l'aide d'une fonction déterministe et des coefficients,
    - obtention (S501) de mesures sur la puissance des signaux transmis par la station de base et reçus par un terminal ou des mesures sur la puissance des signaux transmis par le terminal et reçus par la station de base, et (S502) des mesures de positionnement effectuées par le terminal ou par la station de base,
    - obtention (S503) de moyennes et variances associées aux coefficients de la carte de la zone associée à la station de base qui correspondent aux mesures de puissance,
    - détermination (S504) des distributions de probabilité de la position en utilisant les mesures de puissance et les mesures de positionnement du terminal mobile,
    - vérification (S505) si la variance des distributions de probabilité de la position déterminée est supérieure à une valeur donnée,
    - mise à jour (S506) de la carte seulement si la variance des distributions de probabilité de la position déterminée est inférieure à la valeur donnée.

**2.** Procédé selon la revendication 1, **caractérisé en ce que** la valeur donnée est une valeur prédéterminée ou dépend de la zone.

**3.** Procédé selon l'une quelconque des revendications 1 à 2, **caractérisé en ce que** la carte initiale est modélisée en utilisant la base-extension.

**4.** Procédé selon l'une quelconque des revendications 1 à 3, **caractérisé en ce qu'**une carte de la zone associée à chacune de plusieurs stations de base est déterminée, le terminal recevant des signaux provenant des stations de base ou au moins une station de base recevant des signaux en provenance du terminal, et **en ce qu'**une carte initiale est déterminée pour chaque station de base, des mesures sont reçues sur la puissance des signaux transmis par les stations de base et reçus par le terminal ou transférés par le terminal et reçus par les stations de base, les distributions de probabilité associées aux coefficients des cartes des stations de base qui correspondent aux mesures de puissance sont obtenues, les distributions de probabilité de la position sont déterminées à partir des mesures de puissance et des mesures de positionnement, la variance des distributions de probabilité déterminée est comparée à la valeur donnée et des cartes sont mises à jour seulement si la variance des distributions de probabilité de la position déterminée est inférieure à la valeur donnée.

**5.** Procédé selon l'une quelconque des revendications 1 à 4, **caractérisé en ce que** la carte initiale est déterminée une seule fois et **en ce que** les étapes d'obtention et de détermination des distributions de probabilité, les étapes de vérification et de mise à jour sont déterminées itérativement.

**6.** Procédé selon l'une quelconque des revendications 1 à 5, **caractérisé en ce que** les distributions de probabilités sont déterminées à partir de mesures successives sur une pluralité de mesures de puissance et de positionnement.

**7.** Procédé selon l'une quelconque des revendications 1 à 5, **caractérisé en ce que** le réseau de télécommunication sans fil est un réseau de télécommunication cellulaire sans fil.

**8.** Dispositif pour déterminer une carte d'une zone associée à une station de base, la carte étant composée de distributions de probabilités associées à des coefficients, le dispositif comportant :

- des moyens de détermination d'une carte initiale composée de distributions de probabilités associées à des coefficients et qui est construite en utilisant une représentation base-extension à l'aide d'une fonction déterministe et des coefficients,
- des moyens d'obtention de mesures sur la puissance des signaux transmis par la station de base et reçus par un terminal ou des mesures sur la puissance des signaux transmis par le terminal et reçus par la station de base, et (S502) des mesures de positionnement effectuées par le terminal ou par la station de base,
- des moyens d'obtention de moyennes et variances associées aux coefficients de la carte de la zone associée à la station de base qui correspondent aux mesures de puissance,
- des moyens de détermination des distributions de probabilité de la position en utilisant les mesures de puissance et les mesures de positionnement du terminal mobile,
- des moyens de vérification si la variance des distributions de probabilité de la position déterminée est supérieure à une valeur donnée,
- des moyens de mise à jour de la carte seulement si la variance des distributions de probabilité de la position déterminée est inférieure à la valeur donnée.

**9.** Programme d'ordinateur qui peut être directement chargeable dans un dispositif programmable, comportant des instructions ou portions de code pour mettre en oeuvre les étapes du procédé selon les revendications 1 à 7, lorsque ledit programme informatique est exécuté sur un dispositif programmable.

Fig. 1

Serv

200 — Processor  Network I/F — 206

203 — RAM

202 — ROM  201

## Fig. 2

BS

300 — Processor  Network I/F — 306

303 — RAM  Wireless I/F — 305

302 — ROM  301

## Fig. 3

MT

400 — Processor  Network I/F — 406

403 — RAM  Wireless I/F — 405

402 — ROM  401

## Fig. 4

Fig. 5

S600 — Obtain signal strenght

S601 — Obtain positoning measurements

S602 — Obtain parameters associated to coefficients

S603 — Compute probability distribution

S604 — Determine position

Fig. 6

**EP 2 492 707 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2005246334 A

- DE 102006044293